# EUROPÄISCHE PATENTANMELDUNG

(11) **EP 1 559 508 A1**
(43) Veröffentlichungstag der Anmeldung: **03.08.2005**
(21) Anmeldenummer: 04013564.2
(22) Anmeldetag: 09.06.2004
(51) Int. Cl.: B24B 9/14, B24B 13/00, B28D 1/14, B28D 7/04

(54) **Vorrichtung zum Bearbeiten von Brillengläsern**

(30) Priorität: 29.01.2004 DE 202004001299 U
(71) Anmelder: Altmeyer, Heike, 91126 Kammerstein (DE)
(72) Erfinder: Altmeyer, Heike, 91126 Kammerstein (DE)
(74) Vertreter: Tergau, Dietrich, Dipl.-Ing.

(57) **Zusammenfassung**

Die Erfindung betrifft eine Vorrichtung zum Bohren und Fräsen von Brillengläsern, die gekennzeichnet durch zwei parallel zueinander angeordnete, in Richtung ihrer Längsachsen (z-Achse) verschiebbar gelagerte Bohrer oder Fräser (23) und zwei symmetrisch zur Symmetrieebene der Bohrer bzw. Fräser (23) angeordnete Spannvorrichtungen (11) zum Einspannen der Brillengläser (10), wobei die Spannvorrichtungen (11) symmetrisch zueinander und in zwei sowohl rechtwinklig zur z-Achse als auch rechtwinklig zueinander verlaufenden Achsenrichtungen (x-Achse, y-Achse) verschiebbar gelagert sind.

## Beschreibung

Die Erfindung betrifft eine Vorrichtung zum Bohren und Fräsen von Brillengläsern.

Bei der Herstellung von Brillen müssen, insbesondere bei randlosen Brillen (Bohrbrillen), die Brillengläser mit Bohrungen und/oder Ausnehmungen versehen werden, um die Teile des Brillengestells, nämlich die über die Ohren zu legenden Brillenbügel und die die beiden Gläser verbindende, im Bereich der Nase verlaufende Nasenbrücke, an den Gläsern zu befestigen. Diese Bohrungen und Ausnehmungen an den Brillengläsern werden durch Bohren und Fräsen hergestellt.

Aus der DE 203 03 799 U1 ist eine Schraubverbindung einer derartigen Brille offenbart, deren Brillengläser die erwähnten Bohrungen und Ausnehmungen aufweisen. Wie diese Bohrungen bzw. Ausnehmungen hergestellt werden, ist aus dieser Druckschrift nicht zu entnehmen.

Es ist bekannt, die Bohrungen mit einer einzigen Bohrmaschine in die Brillengläser zu bohren, nachdem diese genau vermessen und die Bohrstellen markiert worden sind. Hierbei tritt jedoch das Problem auf, dass diese Art der Herstellung eine hohe Bearbeitungszeit erfordert und die Genauigkeit der Bohrungen sehr zu wünschen übrig lässt. Besondere Schwierigkeiten bereitet es, die genaue Symmetrie der Bohrungen und Fräsungen bezüglich der beiden zu einer Brille gehörenden Brillengläser zueinander zu erreichen.

Der Erfindung liegt die Aufgabe zugrunde, eine Vorrichtung der eingangs erwähnten Art zu schafen, die eine schnelle und symmetriegenaue Herstellung der Bohrungen und Ausnehmungen in den jeweils zusammengehörenden Gläsern einer Brille ermöglicht.

Diese Aufgabe wird mit den im Anspruch 1 angegebenen Merkmalen gelöst.

Weitere vorteilhafte Ausgestaltungen der Erfindung sind in den Unteransprüchen angegeben.

Die mit der Erfindung erzielten Vorteile bestehen insbesondere darin, dass mit der Vorrichtung kürzere Bearbeitungszeiten und eine sehr hohe Symmetriegenauigkeit der Bohrungen und Ausnehmungen in den jeweils zusammengehörenden Gläsern einer Brille erreicht werden.

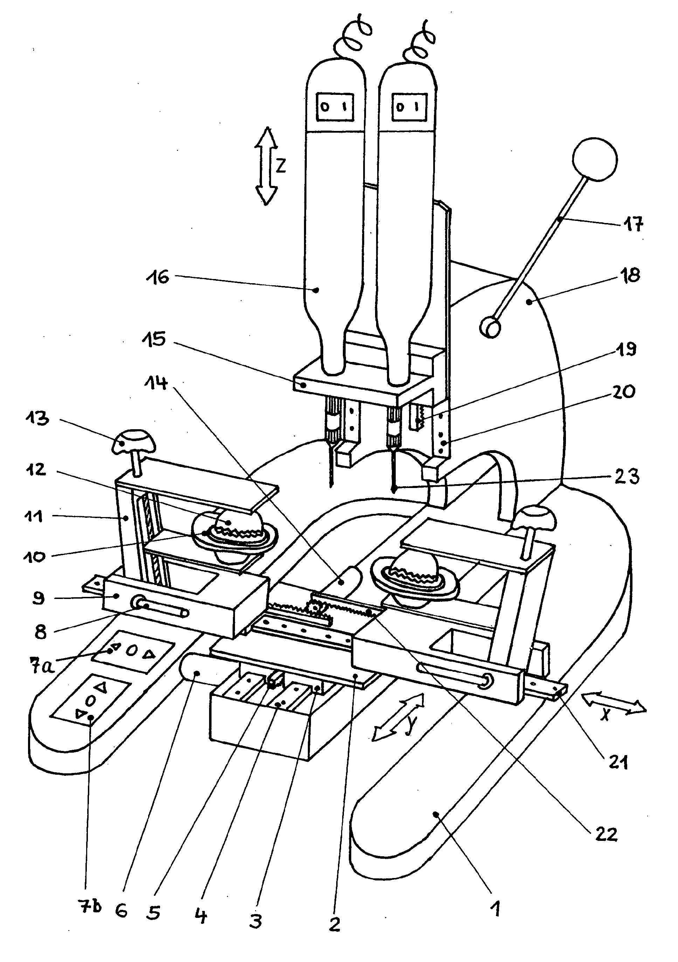

Ein Ausführungsbeispiel der Erfindung ist in der einzigen Zeichnung, die eine vollständige Vorrichtung in perspektivischer Ansicht zeigt, dargestellt und wird im folgenden näher beschrieben.

Die erfindungsgemäße Vorrichtung zum Bohren und Fräsen von Brillengläsern ruht auf einer Grundplatte 1 mit etwa m-förmiger Gestalt und besteht aus zwei parallel zueinander angeordneten Bohrmaschinen 16 mit je einem Bohrer 23 sowie aus zwei symmetrisch zur Symmetrieebene der beiden Bohrer 23 angeordneten Spannvorrichtungen 11 zum Einspannen der zu bearbeitenden Brillengläser 10. Die Spannvorrichtungen 11 sind symmetrisch zueinander und in zwei sowohl rechtwinklig zur z-Achse als auch rechtwinklig zueinander verlaufenden Achsenrichtungen (x-Achse, y-Achse) verschiebbar gelagert.

Die Bohrmaschinen 16 sind auf einem Bohrmaschinenträger 15 montiert, der auf zwei in Richtung der z-Achse verlaufenden, an einem Bohrmaschinenständer 18 angebrachten Führungsschienen 20 gelagert ist. Der Bohrmaschinenträger 15 ist durch Betätigen einer Handhabe 17 über eine Zahnstange 19 in Richtung der z-Achse verschiebbar, so dass beide Bohrmaschinen 16 gleichzeitig und parallel zueinander zum Bohren nach unten in Richtung zu den zu bohrenden Brillengläsern abgesenkt werden kann.

Die Spannvorrichtungen 11 sind auf zwei Führungswagen 9 montiert, die auf einer in Richtung der x-Achse verlaufenden Führungsschiene 21 gelagert sind und durch einen über einen Ein-/Aus-Schalter 7a steuerbaren Elektromotor 14 über zwei gegenläufig angetriebene Zahnstangen 22 in Richtung der x-Achse symmetrisch zueinander, bezogen auf die Symmetrieebene der beiden Bohrer 23, verschoben werden können.

Die Führungsschiene 21 ist auf einer Trägerplatte 2 befestigt, die ihrerseits auf zwei Führungswagen 3 montiert ist, die auf je einer in Richtung der y-Achse verlaufenden Führungsschiene 4 gelagert ist und durch einen über einen Ein-/Aus-Schalter 7b steuerbaren Elektromotor 6 über eine Zahnstange 5 in Richtung der y-Achse verschoben werden kann.

Die beiden zu bearbeitenden Brillengläser 10 einer Brille sind in je einen Zentrierblock 12 einsetzbar und durch je einen Spanngriff 13 symmetrisch zueinander in die beiden Spannvorrichtungen 11 einspannbar. Durch den Zentrierblock 12 wird die symmetrische Lage der Gläser bestimmt.

Die Neigungswinkel der Spannvorrichtungen 11 sind gegenüber der x-Achse individuell einstellbar. Durch je einen Klemmhebel 8 können die Spannvorrichtungen 11 in dem eingestellten Neigungswinkel festgeklemmt werden.

Die in Richtung der y-Achse verlaufenden Führungsschienen 4 und der Bohrmaschinenständer 18 sind auf dem mittleren Steg der etwa m-förmig gestalteten Grundplatte 1 montiert. Auf dem einen Seitensteg der Grundplatte 1 sind die beiden Ein-/Aus-Schalter 7a, 7b angebracht.

### Bezugszeichenliste

- 1: Grundplatte
- 2: Trägerplatte für Spannvorrichtungen
- 3: Führungswagen (y-Achse)
- 4: Führungsschiene (y-Achse)
- 5: Zahnstange (y-Achse)
- 6: Motor (y-Achse)
- 7a: Ein-/Aus-Schalter (x-Verschiebung)
- 7b: Ein-/Aus-Schalter (y-Verschiebung)
- 8: Klemmhebel
- 9: Führungswagen (x-Achse)
- 10: Brillenglas
- 11: Spannvorrichtung
- 12: Zentrierblock
- 13: Spanngriff
- 14: Motor (x-Achse)
- 15: Bohrmaschinenträger
- 16: Bohrmaschine
- 17: Handhabe (Absenken des Bohrmaschinenträgers)
- 18: Bohrmaschinenständer
- 19: Zahnstange (z-Achse)
- 20: Führungsschiene (z-Achse)
- 21: Führungsschiene (x-Achse)
- 22: Zahnstange (x-Achse)
- 23: Bohrer oder Fräser

## Patentansprüche

1. Vorrichtung zum Bohren und Fräsen von Brillengläsern, **gekennzeichnet durch**
a) zwei parallel zueinander angeordnete, in Richtung ihrer Längsachsen (z-Achse) verschiebbar gelagerte Bohrer oder Fräser (23) und
b) zwei symmetrisch zur Symmetrieebene der Bohrer bzw. Fräser (23) angeordnete Spannvorrichtungen (11) zum Einspannen der Brillengläser (10),
c) wobei die Spannvorrichtungen (11) symmetrisch zueinander und in zwei sowohl rechtwinklig zur z-Achse als auch rechtwinklig zueinander verlaufenden Achsenrichtungen (x-Achse, y-Achse) verschiebbar gelagert sind.

2. Vorrichtung nach Anspruch 1, **dadurch gekennzeichnet, dass** zwei handelsübliche Bohrmaschinen (16) parallel zueinander und symmetrisch zu der Symmetrieebene fest auf einem Bohrmaschinenträger (15) montiert sind, der auf wenigstens einer in Richtung der z-Achse verlaufenden, an einem Bohrmaschinenständer (18) angebrachten Führungsschiene (20) gelagert und durch Betätigen einer Handhabe (17) über eine Zahnstange (19) in Richtung der z-Achse verschiebbar ist.

3. Vorrichtung nach Anspruch 1 oder 2, **dadurch gekennzeichnet, dass** die Spannvorrichtungen (11) auf je einem Führungswagen (9) montiert sind, wobei die Führungswagen (9) auf wenigstens einer in Richtung der x-Achse verlaufenden Führungsschiene (21) gelagert und durch einen über einen Ein-/Aus-Schalter (7a) steuerbaren Elektromotor (14) über zwei gegenläufig angetriebene Zahnstangen (22) in Richtung der x-Achse verschiebbar sind.

4. Vorrichtung nach einem der Ansprüche 1 bis 3, **dadurch gekennzeichnet, dass** die wenigstens eine Führungsschiene (21) auf einer Trägerplatte (2) befestigt ist, die ihrerseits auf wenigstens einem Führungswagen (3) montiert ist, der auf wenigstens einer in Richtung der y-Achse verlaufenden Führungsschiene (4) gelagert und durch einen über einen Ein-/Aus-Schalter (7b) steuerbaren Elektromotor (6) über eine Zahnstange (5) in Richtung der y-Achse verschiebbar ist.

5. Vorrichtung nach einem der Ansprüche 1 bis 4, **dadurch gekennzeichnet, dass** beiden die zu bearbeitenden Brillengläser (10) einer Brille in je einen Zentrierblock (12) einsetzbar und durch je einen Spanngriff (13) symmetrisch zueinander in die beiden Spannvorrichtungen (11) einspannbar sind.

6. Vorrichtung nach einem der Ansprüche 1 bis 5, **dadurch gekennzeichnet, dass** die Neigungswinkel der Spannvorrichtungen (11) gegenüber der x-Achse individuell einstellbar sind, wobei die Spannvorrichtungen (11) durch je einen Klemmhebel (8) in dem eingestellten Neigungswinkel festklemmbar sind.

7. Vorrichtung nach einem der Ansprüche 1 bis 6, **dadurch gekennzeichnet, dass** die wenigstens eine in Richtung der y-Achse verlaufende Führungsschiene (4) und der Bohrmaschinenständer (18) auf einer gemeinsamen Grundplatte (1) montiert sind.

8. Vorrichtung nach einem der Ansprüche 1 bis 7, **dadurch gekennzeichnet, dass** die Brillengläser (10) aus Glas, aus Kunststoff, aus Policarbonat, aus CR39, aus Tilium, aus PNX oder aus anderen durchsichtigen Werkstoffen bestehen.
